# EUROPEAN PATENT APPLICATION

(11) **EP 4 311 212 A1**
(43) Date of publication of application: **24.01.2024**
(21) Application number: 22851740.5
(22) Date of filing: 20.06.2022
(51) Int. Cl.: H04M 1/725, H04M 3/42

(54) **METHOD FOR REPORTING MALICIOUS CALL, TERMINAL, ELECTRONIC DEVICE, AND STORAGE MEDIUM**

(30) Priority: 05.08.2021 CN 202110898019
(71) Applicant: ZTE Corporation, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Savi, Massimiliano
(86) International application number: PCT/CN2022/099897
(87) International publication number: WO 2023/011024

(57) **Abstract**

A method for reporting a malicious call, a terminal, an electronic device, and a computer storage medium. The method comprises: receiving data information sent by a peer end of a call; if a reporting instruction of a user is detected, automatically generating a reporting message, the reporting message carrying at least part of the data information; and sending the reporting message to a designated report receiving center.

## Description

### CROSS-REFERENCE TO RELATED APPLICATION

This application is filed on the basis of the Chinese patent application No. 202110898019.2 filed August 5, 2021, and claims priority of the Chinese patent application, the entire contents of which are incorporated herein by reference.

### TECHNICAL FIELD

The present disclosure relates to the technical field of mobile communication, in particular to a method for reporting a malicious call.

### BACKGROUND

In the field of communication, users often receive malicious call such as malicious promotion fraud via the cell phones, which has a great impact on people's normal life.

Based on this, one can download interception software to block some mobile phone numbers marked as harassing calls, or users can log in to the 12321 website to fill in the report information page, fill in the user's relevant information and the phone number to report, and then click "Submit" button for information submission. However, the reporting process is not only complicated, but also the efficiency of the relevant authority in the administration of malicious calls is low and the user experience is poor.

### SUMMARY

In order to at least alleviate the above-mentioned problem, an embodiment of the present disclosure provides a method for reporting a malicious call, which simplifies the process of reporting malicious calls by users, thus providing great convenience for users to report malicious calls, improving the efficiency of the relevant authority in the administration of malicious calls, and enhancing the user experience.

An embodiment of the present disclosure provides a method for reporting a malicious call, which includes, receiving data information sent by a call peer; automatically generating a report message in response to a detected report instruction from a user; where the report message carries at least part of the data information; and sending the report message to a designated report acceptance center.

An embodiment of the present disclosure provides a terminal device, which includes, a receiving module, configured to receive data information sent by a call peer; a generating module, configured to automatically generate a report message in response to a detected report instruction from a user; where the report message carries at least part of the data information; and a sending module, configured to send the report message to a designated report acceptance center.

An embodiment of present disclosure provides an electrical device, which includes, at least one processor; and a memory in communication with the at least one processor; where the memory stores at least one instruction executable by the at least one processor, which when executed by the at least one processor, causes the processor to carry out the method as described above.

An embodiment of the present disclosure provides a computer-readable storage medium storing at least one computer program which, when executed by a processor, causes the processor to carry out the method as described above.

### BRIEF DESCRIPTION OF DRAWINGS

FIG. 1 depicts a flowchart showing a method for reporting a malicious call according to an embodiment of the present disclosure;
FIG. 2 depicts a flowchart showing a method for reporting a malicious call according to another embodiment of the present disclosure;
FIG. 3 depicts a schematic diagram showing a third preset interface according to an embodiment of the present disclosure;
FIG. 4 depicts a schematic diagram showing a terminal device according to an embodiment of the present disclosure; and
FIG. 5 depicts a schematic diagram showing an electronic device according to an embodiment of the present disclosure.

### DETAILED DESCRIPTION

Various embodiments of the present disclosure will be described in detail below in conjunction with the drawings to illustrate the purpose, technical scheme and advantages of the present disclosure. However, it shall be appreciated by those having ordinary skill in the art that many technical details are put forward in order to clarify the present disclosure. However, the technical solutions claimed in the present disclosure can be practiced even without these technical details and various alternations and modifications based on the following embodiments.

An embodiment of the present disclosure relates to a method for reporting a malicious call, which can be applied to a terminal device, such as a mobile phone of a user, a tablet, or the like. In this embodiment, data information sent by the call peer is received; a report message that carries at least part of the data information is automatically generated in response to a user's report instruction; and the report message is sent to a designated report acceptance center, thus significantly simplifying user's operations to report malicious calls, and providing great convenience for users to report malicious calls, improving the efficiency of the relevant authority in the administration of malicious calls, and enhancing the user experience.

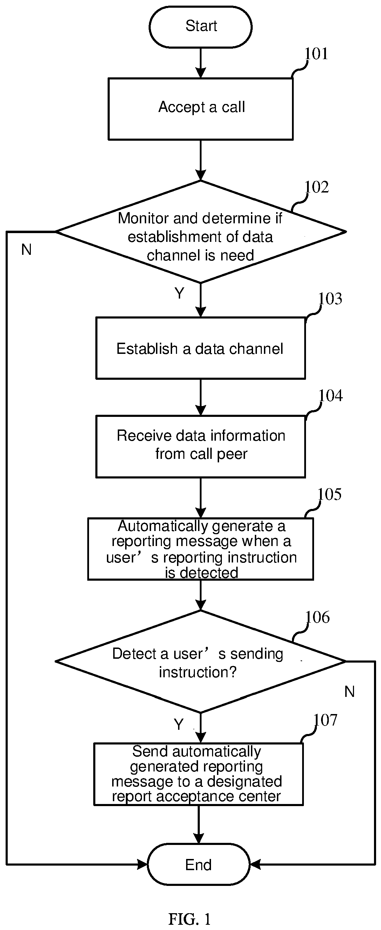

The following is a detailed description of the method for reporting a malicious call according to an embodiment of the present disclosure. The following contents are intended to illustrate the scheme, and shall not be interpreted as a must to the scheme. As shown in FIG. 1, the method includes the following operations.

At operation 101, a phone call is accepted by a terminal device.

In particular, after the terminal device receives a request for establishing a call connection from a call peer, if the terminal device detects a user's instruction for accepting the phone call, the terminal device establishes the call connection with the call peer and starts the communication.

The types of calls involved in this embodiment include, but are not limited to, Voice over New Radio (VoNR), Voice over LTE (VoLTE), Voice over Wi-Fi (VoWiFi), or other IP Multimedia Subsystem (IMS) calls.

In addition, the call in this embodiment is displayed in the form of a conversation, and whether the call ends or not, will not affect the user's viewing of the records of both sides in the first preset interface. In other words, the user can view the data information such as text, images, audio, or video sent by both sides during the call or after the call ends. In particular, the first preset interface refers to the call interface or the call recording interface, which can ensure that users can check the records, such as text, images, audio, video, or the like, sent by both parties at any time during the call or after the call terminates.

The method proceeds to operation 102 after the call connection is established.

At operation 102, the terminal device determines whether to establish a data channel by monitoring; the method proceeds to operation 103 in response to a positive determination. Otherwise, the process ends.

In particular, the terminal device monitors the Session Initiation Protocol (SIP) signaling sent by the call peer through the monitoring module, and analyzes the Session Description Protocol (SDP) offer message. If the "dcmap" field is identified in the SDP, the monitoring module provides an instruction to establish a data channel to the data channel management module. Otherwise, the process ends. The "dcmap" field is indicative of the requirement of establishing a data channel.

In an example, during the analysis of the SDP offer message, a plurality of data channels may be mapped to a single-channel SDP media description. Each SDP attribute and stream related to "a=dcmap" is a unique media description, as shown in Table 1 below.

**Table 1**

| | SDP offer |
|---|---|
| | m=application 52718 UDP/DTLS/SCTP webrtc-datachannel |
| | b=AS:500 |
| | a=max-message-size: 1024 |
| | a=sctp-port:5000 |
| | a=setup:passive |
| | a=fingerprint: SHA-1 |
| 4A:AD:B9:B1:3F:82:18:3B:54:02:12:DF:3E:5D:49:6B:19:E5:7C:AB | |
| | a=tls-id: abc3de65cddef001be82 |
| | a=dcmap:10 subprotocol="http" |
| | a=dcmap:38754 max-time=150;label="low latency" |
| | a=dcmap:7216 max-retr=5;label="low loss" |
| | a=3gpp-qos-hint:loss=0.01;latency=100 |

The three SDP attributes and streams related to "a=dcmap" in Table 1 indicate three different ways to establish data channels, as follows.
"a = dcmap: 10 subprotocol = 'http'" indicates that hypertext transfer protocol (HTTP) shall be adopted when data channel is established.
"a=dcmap:38754 max-time=150; Label='low latency 'indicates that the data channel is to be established with a low latency mode.
"a=dcmap:7216 max-retr=5; Label='low loss'" indicates that the data channel is to be established with a low-loss mode.

After determining how the data channel shall be established as described above, the method proceeds to operation 103.

At operation 103, a data channel is established.

In particular, the processes related to data channels include establishing, maintaining and releasing the data channel, which are all carried out by the data channel management module. The data channel is employed to transmit data information such as words, images, audio, or video between the terminal device and the call peer. In an embodiment of the present disclosure, the type of data channel established is a data channel established between the terminal device and the data server at the network side (i.e., Bootstrap data channel), or the data channel directly established between the terminal devices (i.e., non-Bootstrap data channel). In an embodiment of the present disclosure, the call peer engaged in the establishment of the data channel can be a data server at the network side, or a terminal device.

The method proceeds to operation 104 after the data channel is established.

At operation 104, data information sent by the call peer is received.

In particular, the call peer may send data information to the terminal device through the data channel established in operation 103, during the call between the terminal device and the call peer. The data information can be the type of text, image, audio, video, or the like.

The method proceeds to operation 105 after the data information sent by call peer is received.

At operation 105, a report message is automatically generated in response to a user's report instruction. For example, the report message is automatically generated in response to a detection of the user's preset operation on the preset control on the first preset interface.

In an example, the first preset interface can be a call interface, the preset control can be a "report" button, and the preset operation can be a tap operation. In other words, after tapping on the "Report" button on the call interface by the user, a report message is automatically generated.

In an example, a second preset interface is jumped to, in response to a detected preset operation on the preset control in the first preset interface by the user; where the second preset interface contains data information sent by the call peer for selection by the user. The automatically generated report message carries some data information selected by the user, if it is detected that the user has selected the data information included in the second preset interface. If the user has not selected, all options are selected by default, and the automatically generated report message will carry all data information. The content of the report message can be varied according to the practical situation, and the type of content can be text, images, audio, or video, etc.

The method proceeds to operation 106 after the report message is automatically generated.

At operation 106, the method proceeds to operation 107 in response to a detection of a sending instruction by the user. Otherwise, the process ends.

At operation 107, the automatically generated report message is sent to a designated report acceptance center.

According to the method for reporting a malicious call set forth in this embodiment, data information sent by the call peer is received; a report message that carries at least part of the data information is automatically generated in response to a user's report instruction; and the report message is sent to a designated report acceptance center. This process does not require operations by the users like, the submission of user information along with the phone number of the malicious call along with various reporting information. The user only needs to just tap on the "Report" button, and the terminal device automatically generates a report message thereafter. The user then selects the data information that needs to be provided. After the selection is completed, the data information is sent via the terminal device to the report acceptance center. The above-described operations such as the automatic generation of the report message and the selection of the evidence to be provided, significantly simplify users' operations to report malicious calls, provide a great convenience for users to report malicious calls, improve the efficiency of the relevant authority in the administration of malicious calls, and enhance the user experience.

The processes of the above methods are divided only for clarity of description, and can be combined into one single process or some processes can be divided into several processes, any process in which an identical logical relationship to the present disclosure is included shall be within the scope of the present disclosure. The algorithm or process with any minor modifications or insignificant designs which do not change the core design of the algorithm and process, shall be within the scope of the present disclosure.

An embodiment of the present disclosure relates to a method for reporting a malicious call, which can be applied to a terminal device. In this embodiment, the first preset interface is a call recording interface, and after the user's preset operation on the preset control set on the call recording interface is detected, the method further includes, jumping to a third preset interface that contains the information of the type of the malicious call for selection of the user, and the generated report message further carries the information of the type of the malicious call selected by the user. In addition, after the report message is sent to the designated report acceptance center, the method further includes performing real-time queries of the processing progress of the report message to the report acceptance center according to the user's instruction. In this embodiment, after the report is completed, the user can perform real-time queries of the processing progress of the report message to the report acceptance center, thus providing great convenience for users to report malicious calls, improving the efficiency of the relevant authority in the administration of the malicious calls, and enhancing the user experience and competitiveness.

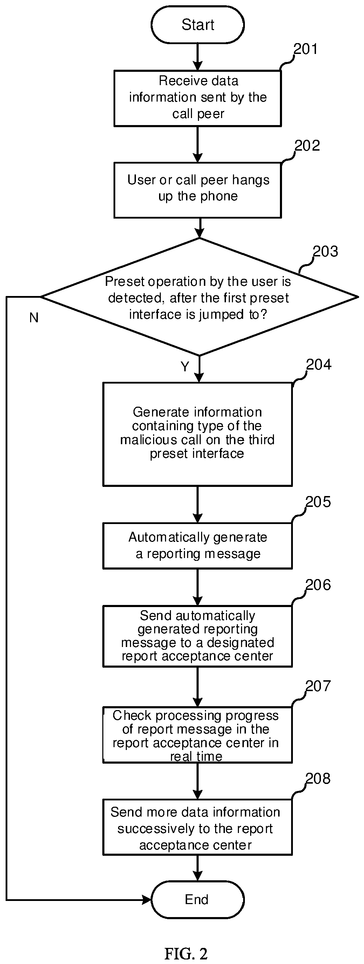

The following is a detailed description of the method for reporting a malicious call according to an embodiment of the present disclosure. The following contents are intended to illustrate the scheme, and shall not be interpreted as a must to the scheme. As shown in FIG. 2, the method includes the following operations.

At operation 201, data information sent by the call peer is received.

The process endured from the acceptance of the call to the reception of the data information sent by the call peer is the same as that described with respect to operations 101 to 104, and which will not be repeated here. After the data information is received, the method proceeds to operation 202.

At operation 202, the user or the call peer hangs up the phone. The method proceeds to operation 203 after the user or the call peer hangs up the phone.

At operation 203, a determination is performed as to whether a preset operation by the user is detected, after the first preset interface is jumped to.

In particular, after the user or the call peer hangs up the phone, the terminal device automatically returns to the first preset interface. In this embodiment, the first preset interface is the call recording interface, and the preset control is shown on the call recording interface. Since the call involved in this embodiment is displayed in the form of conversation, even if the user hangs up the phone, the user can still view data information such as files of text, images, audio, or video sent by both sides. The form of conversation allows users to view data information at any time in the call interface or call recording interface, such as text, images, audio, or video sent by both sides of the call. Thereby, the problem that, data information sent by both sides of the call disappears after the call ends, is prevented.

The process of the determination as to whether the user's preset operation is detected on the first preset interface is identical with the above-described operation 105, and which is thus not repeated here. The method proceeds to operation 204 in response to a detection of the user's preset operation on the first preset interface. Otherwise, the process ends.

At operation 204, information containing the type of the malicious call is generated on the third preset interface in response to a detected user's preset operation on the first preset interface. Otherwise, the process ends.

In particular, after the user or the call peer hangs up the phone, a "report" button is shown on the first preset interface. The user can select the data information to be provided according to his own situation, or the data information is selected by default, and then the user taps the report button to report the malicious call. After the user taps the "report" button, the third preset interface is switched to automatically, to generate a report message. The information containing the type of the malicious call is generated on the third preset interface provides several options for users to select the type of the malicious call. The options include, prize winning fraud, financial fraud, impersonation of staff from Public security bureau, Procuratorate, or Court, impersonation of leaders, online shopping fraud, or others. The above types include almost all types of malicious calls, and the user's selection of types can allow more accurate processing by the server side.

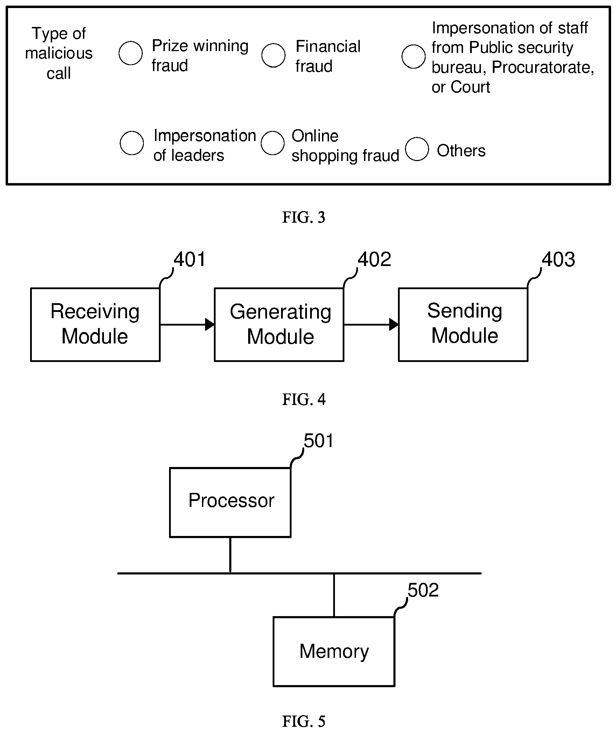

The generated third preset interface containing the type information of the malicious call is shown in FIG. 3.

The command that generates the third preset interface containing the type information of the malicious call is as follows:

```
     <?xml version="1.0" encoding="UTF-8"?>
     <SR xmlns="um:gsma:params:xml:ns:rcs:rcs:spamreport">
       <Chatbot>12321@botplatform.rcs.botspam</Chatbot>
       <Message-ID>xxxx</Message-ID>
       <Type> prize winning fraud </Reason>
     </SR>
```

At operation 205, a report message is generated automatically.

The process of automatically generating the report message has been described with respect to operation 105, and which is thus not described here. The report message in this embodiment not only carries some data information, but also carries the information of information of the type of the malicious call selected by the user.

At operation 206, the automatically generated report message is sent to a designated report acceptance center in response to a sending instruction by the user.

At operation 207, the processing progress of the report message is checked in the report acceptance center in real-time, after the report message and the type of the malicious call are sent to the designated report acceptance center.

At operation 208, after the report message and the information of the type of malicious call are sent to the designated report acceptance center, more data information is successively sent to the report acceptance center.

This embodiment does not limit the sequence of the implementation of operations 207 and 208, and thus, operation 207 may be implemented before or after operation 208, while such sequence does not affect the implementation.

According to the method for reporting a malicious call set forth in this embodiment, a report message carrying the type of the malicious call selected by the user is automatically generated after the user taps the report button. The user only needs to select the type of the call in the pop-up interface according to the facts. After the report message is sent to the report acceptance center by the terminal device, the user can interact with the report acceptance center as desired, such as inquiring about the processing progress of the report message and successively submitting more data information. On the basis of greatly simplifying the process of users reporting malicious phone calls, a platform is provided for viewing the processing progress of report message and supplementing evidence such as text, images, audio and video, allowing users to still interact with the report acceptance center after the report is completed, thus providing great convenience for users to report malicious calls, improving the efficiency of relevant authority in administration of malicious calls, and enhancing the user experience and competitiveness.

In addition, in the above embodiment, after the user's report instruction is detected, the second preset interface can be switched to first. After the user selects the data information to be provided, the third preset interface is switched to for selection of the type of the malicious call. Alternatively, the third preset interface is switched to first for the selection of the type of the malicious call.

The present disclosure does not limit the sequence of the jumping to the second preset interface and the jumping to the third preset interface.

In addition, the form of the report acceptance center in the above embodiment can be WeChat official account, applet, webpage, etc., while the present disclosure is not limited thereto.

The processes of the above methods are divided only for clarity of description, and can be combined into one single process or some processes can be divided into several processes, any process in which an identical logical relationship to the present disclosure is included shall be within the scope of the present disclosure. The algorithm or process with any minor modifications or insignificant designs which do not change the core design of the algorithm and process, shall be within the scope of the present disclosure.

An embodiment of the present disclosure provides a terminal device, as shown in FIG. 4, the terminal device includes a receiving module 401 configured to receive data information sent by a call peer; a generating module 402 configured to automatically generate a report message that carries at least part of the data information in response to a report instruction from a user; and a sending module 403 configured to send the report message to the designated report acceptance center.

In an example, the generating module 402 is configured to automatically generate a report message in response to a detected preset operation on a preset control in a first preset interface by a user.

In an example, the first preset interface includes a call interface or a call recording interface.

In an example, the generating module 402 is further configured to jump to a second preset interface in response to a detected preset operation on the preset control in the first preset interface by the user; where the second preset interface contains data information sent by the call peer for selection by the user. A report message carrying selected data information is automatically generated, in response to a selection for the selected data information contained in the second preset interface made by the user.

In an example, the generating module 402 is further configured to jump to a third preset interface after the user's preset operation on the preset control on the first preset interface is detected; where the third preset interface includes information on the type of the malicious call for selection by the user. The generated report message further carries the selected information of the type of the malicious call.

In an example, the sending module 403 is further configured to check the processing progress of the report message in the report acceptance center in real-time according to the user's instruction, after the report message is sent to the designated report acceptance center.

It is clear that this embodiment is a device embodiment corresponding to the method embodiment applied to the terminal device as described above, and this embodiment may be practiced in cooperation with the method embodiment. The relevant technical details as described in the method embodiment can be also applied to this embodiment. In order to reduce redundancy, they will not be repeated here. Accordingly, the relevant technical details as described in this embodiment can also be applied to the method embodiment regarding the terminal device described above.

It should be noted that all the modules involved in the above two embodiments are logic modules. In practical application, a logic unit can be a physical unit, a part of a physical unit or a combination of multiple physical units. In addition, in order to highlight the innovative part of the present disclosure, units that are not closely related to the solution of the technical problems as set forth in the present disclosure are not introduced in this embodiment, but this does not mean that no further unit is included in this embodiment.

An embodiment of present disclosure provides an electronic device. As shown in FIG. 5, the device includes, at least one processor 501; and a memory 502 in communication with the at least one processor; where the memory stores at least one instruction executable by the at least one processor 501 which, when executed by the at least one processor 501, causes the processor to carry out the method as described above.

The memory and the processor are connected by a bus. The bus can include any number of interconnected buses and bridges, and the bus connects various circuits of one or more processors and the memory together. The bus can also connect various other circuits, such as peripheral devices, voltage regulators, power management circuits, etc., all of which are well-known in the art, so they will not be further described here. The bus interface provides an interface between the bus and the transceiver. The transceiver can be one element or a plurality of elements, such as a plurality of receivers and transmitters, providing a unit for communicating with various other devices over a transmission medium. The data processed by the processor is transmitted over the wireless medium through the antenna. Furthermore, the antenna also receives the data and transmits it to the processor.

The processor is configured for managing the bus and general processing, and can also provide various functions, including timing, peripheral interface, voltage regulation, power management and other control functions. And the memory can be utilized to store data for the processor during operations.

The above product can carry out the method according to any one of the embodiments of the present disclosure, and has corresponding functional modules and beneficial effects. For technical details not described in detail in this embodiment, please refer to the method set forth in the above-described embodiments of the present disclosure.

The method according to various embodiments of the present disclosure eliminates the need for logging in to the 12321 website and the submission of user information along with various reporting information by, automatically generating a reporting message carrying at least some data information based on the user's reporting instruction, and sending the reporting message to the designated reporting acceptance center. This process does not require the submission of user information along with the phone number of the malicious call along with various reporting information, thus significantly simplifying users' operations to report malicious calls, and providing great convenience for users to report malicious calls, improving the efficiency of relevant authority in administration of malicious calls, and enhancing the user experience.

That is, it shall be appreciated by those having ordinary skill in the art that all or part of the processes for carrying out the above-mentioned method embodiments can be implemented by instructing related hardware through a program, which is stored in a storage medium and includes several instructions to cause a device (such as a single chip, a chip, etc.) or a processor perform all or part of the processes of the methods in various embodiments of the present disclosure. The aforementioned storage media include: U disk (flash disk), mobile hard disk, Read-Only Memory (ROM), Random Access Memory (RAM), magnetic disk or optical disk and other media that can store program codes.

The above-described embodiments are provided for those having ordinary skills in the art to practice and implement the present disclosure. Those having ordinary skills in the art, can make various modifications and alternations to the above-described embodiments without departing from the scope of the present disclosure. Therefore, the scope of the present disclosure is not limited by the above-described embodiments, and shall be in line with the broadest reasonable scope as defined in the claims.

## Claims

1. A method for reporting a malicious call, comprising,
receiving data information sent by a call peer;
automatically generating a report message in response to a detected report instruction from a user; wherein the report message carries at least part of the data information; and
sending the report message to a designated report acceptance center.

2. The method as claimed in claim 1, wherein the detected report instruction from the user comprises, a detected preset operation by the user on a preset control on a first preset interface.

3. The method as claimed in claim 2, wherein the first preset interface comprises,
a call interface, or a call recording interface.

4. The method as claimed in claim 2, further comprising,
jumping to a second preset interface in response to a detected preset operation by the user on the preset control on the first preset interface; wherein, the second preset interface comprises data information sent by the call peer.

5. The method as claimed in claim 4, wherein automatically generating the report message comprises,
automatically generating the report message carrying selected data information, in response to a selection by the user for the data information comprised in the second preset interface.

6. The method as claimed in claim 2, wherein after the preset operation of the user on the preset control on the first preset interface is detected, the method further comprises,
jumping to a third preset interface that comprises information on a type of the malicious call; and
the generated report message further carries selected information of the type of the malicious call.

7. The method as claimed in any one of claims 1 to 6, wherein after sending the report message to the designated report acceptance center, the method further comprises,
checking processing progress of the report message in the report acceptance center in real time according to an instruction from the user.

8. A terminal device, comprising,
a receiving module, configured to receive data information sent by a call peer;
a generating module, configured to automatically generate a report message in response to a detected report instruction from a user; wherein the report message carries at least part of the data information; and
a sending module, configured to send the report message to a designated report acceptance center.

9. An electronic device, comprising,
at least one processor; and,
a memory in communication with the at least one processor;
wherein the memory stores an instruction executable by the at least one processor, which when executed by the at least one processor, causes the at least one processor to carry out the method as claimed in any one of claims 1 to 7.

10. A computer-readable storage medium storing at least one computer program which, when executed by a processor, causes the processor to carry out the method as claimed in any one of claims 1 to 7.
